# EUROPEAN PATENT SPECIFICATION

(11) **EP 3 893 465 B1**
(45) Date of publication and mention of the grant of the patent: **15.07.2026**
(21) Application number: 19897275.4
(22) Date of filing: 11.12.2019
(51) Int. Cl.: H04L 67/1097, H04L 67/141

(54) **METHOD, DEVICE, AND SYSTEM FOR DISK REDIRECTION**
VERFAHREN, VORRICHTUNG UND SYSTEM ZUR UMLENKUNG VON SCHEIBEN
PROCÉDÉ, DISPOSITIF ET SYSTÈME DE REDIRECTION DE DISQUE

(30) Priority: 12.12.2018 CN 201811519561
(43) Date of publication of application: 13.10.2021
(73) Proprietor: ZTE Corporation, Shenzhen, Guangdong 518057 (CN)
(72) Inventor: CHEN, Ming, Shenzhen, Guangdong 518057 (CN)
(74) Representative: Savi, Massimiliano
(86) International application number: PCT/CN2019/124495
(87) International publication number: WO 2020/119710

(56) References cited:
- CN-A- 103 442 024
- CN-A- 103 916 479
- CN-A- 105 338 048
- CN-A- 105 338 048
- CN-B- 107 316 413
- US-A1- 2009 037 434
- US-A1- 2014 101 434

## Description

### TECHNICAL FIELD

The present disclosure relates to the field of computer technology, in particular to, a method, apparatus, and system for disk redirection, and storage medium.

### BACKGROUND

Cloud computing is listed by China as a strategic emerging industry to be supported. As one of the earliest projects in the cloud computing industry, the cloud desktop technology has a huge market scale. In recent years, the cloud desktop technology has flourished in China. Many schools, governments and enterprises have adopted cloud desktop products instead of traditional PC. Cloud desktop technology raises a revolution in enterprise IT architectures that delivers a mobile computing experience while meeting the needs of many specific industries.

In the cloud desktop technology, for an aspect of disk redirection, especially mass storage device redirection, there are a lot of problems to be solved. At present, most of the schemes with respect to disk redirection rely on network file sharing based on a SMB protocol. The network file sharing described above requires network penetration to achieve mutual access between files.

Patent literature US2014/0101434A1 discloses systems, devices and process for secure storage, retrieval and management of files using cloud-based hosting services are supported with a real identity authentication device and process. Biometric authentication is required for encryption/decryption of files. The real identity authentication processes are integrated with file exchange processes and API' s related to the hosting services.

Patent literature CN107316413B discloses a payment method, a payment device, a storage medium and electronic equipment. The payment method includes steps in which: attribute information of one or more to-be-paid items from received voice information is received; according to the attribute information of the one or more to-be-paid items, a purchasing list for the to-be-paid items is generated; and a payment window for the purchasing list is displayed on an operation interface of the electronic equipment, where the payment window is used for confirming and/or paying the purchasing list for the to-be-paid items.

Patent literature CN105338048 discloses a virtual desktop base framework based file transmission system, has external storing device for storing user catalogue file information, where external storage device transmits user catalogue file information to virtual machine.

While the above publications may achieve their intended purposes, there is still a need for a new and improved method for disk redirection.

### SUMMARY

The invention is defined in the appended claims.

The present disclosure provides a method for disk redirection, device, system, computer apparatus and storage medium.

A method for disk redirection is provided, which includes: receiving an operation request for a file in a drive letter, and generating a corresponding operation instruction and operation content according to the operation request; where the drive letter is created according to drive letter information sent by a cloud terminal , and the drive letter is an entry for accessing a disk in the cloud terminal; sending the operation instruction and operation content to the cloud terminal, to allow the operation instruction and operation content being executed on a file in a disk of the cloud terminal, where the disk corresponds to the operation request; and receiving a file operation result after execution and responding to the file operation result, to realize a synchronous operation between the file in the drive letter and the file in the corresponding disk, a preset operation channel is preset for the preset operation request between the cloud terminal and the cloud desktop.

A computer apparatus is provided, which includes a memory, a processor and a computer program stored in the memory and executable by the processor. When the processor executes the computer program, the following steps are implemented: receiving an operation request for a file in a drive letter, and generating a corresponding operation instruction and operation content according to the operation request; sending the operation instruction and operation content to a cloud terminal, to allow the operation instruction and operation content being executed on a file in a disk of the cloud terminal, where the disk corresponds to the operation request; and receiving a file operation result after execution and responding to the file operation result, to realize a synchronous operation between the file in the drive letter and the file in the corresponding disk.

A computer-readable storage medium is provided, on which a computer program is stored. When the computer program is executed by a processor, the following steps are implemented: receiving an operation request for a file in a drive letter, and generating a corresponding operation instruction and operation content according to the operation request; where the drive letter is created according to drive letter information sent by a cloud terminal , and the drive letter is an entry for accessing a disk in the cloud terminal; sending the operation instruction and operation content to the cloud terminal, to allow the operation instruction and operation content being executed on a file in a disk of the cloud terminal, where the disk corresponds to the operation request; and receiving a file operation result after execution and responding to the file operation result, to realize a synchronous operation between the file in the drive letter and the file in the corresponding disk; a preset operation channel is preset for the preset operation request between the cloud terminal and the cloud desktop.

A method for disk redirection is provided, which includes: receiving an operation instruction and operation content sent by a cloud desktop, where the operation instruction and operation content are generated according to an operation request for a file in a drive letter of the cloud desktop, and the drive letter is created according to drive letter information sent by a cloud terminal, and the drive letter is an entry for accessing a disk in the cloud terminal; executing the operation instruction and the operation content on a file in a disk corresponding to the operation request; and sending a file operation result after execution to the cloud desktop, to realize a synchronous operation between the file in the drive letter and the file in the corresponding disk; a preset operation channel is preset for a reset operation request between the cloud terminal and the cloud desktop.

A computer-readable storage medium is provided, on which a computer program is stored. When the computer program is executed by a processor, the following steps are implemented: receiving an operation instruction and operation content sent by a cloud desktop, where the operation instruction and operation content are generated according to an operation request for a file in a drive letter of the cloud desktop, and the drive letter is created according to drive letter information sent by a cloud terminal, and the drive letter is an entry for accessing a disk in the cloud terminal; executing the operation instruction and the operation content on a file in a disk corresponding to the operation request; and sending a file operation result after execution to the cloud desktop, to realize a synchronous operation between the file in the drive letter and the file in the corresponding disk; a preset operation channel is preset for a reset operation request between the cloud terminal and the cloud desktop.

A system for disk redirection is provided, which includes a cloud terminal and a cloud desktop, where, the cloud desktop is configured to receive an operation request for a file in a drive letter, and generate a corresponding operation instruction and operation content according to the operation request; where the drive letter is created according to drive letter information sent by a cloud terminal, and the drive letter is an entry for accessing a disk in the cloud terminal, and send the operation instruction and operation content to the cloud terminal; the cloud terminal is configured to execute the operation instruction and the operation content on a file in a disk corresponding to the operation request; and the cloud desktop is configured to receive a file operation result after execution and respond to the file operation result, to realize a synchronous operation between the file in the drive letter and the file in the corresponding disk a preset operation channel is preset for the preset operation request between the cloud terminal and the cloud desktop.

### BRIEF DESCRIPTION OF DRAWINGS

The accompanying drawings, which are incorporated in and constitute a part of the description, illustrate embodiments consistent with the present disclosure and together with the description serve to explain the principles of the present disclosure.

In order to illustrate the technical schemes in the embodiments of the present disclosure or in some situations, the following briefly describes the accompanying drawings required for use in the embodiments or some situations, and it will be apparent to those having ordinary skills in the art that other drawings may be obtained from these drawings without creative effort.
Fig. 1 is an application scenario schematic diagram showing a method for disk redirection in an embodiment;
Fig. 2 is a flowchart showing a method for disk redirection in an embodiment;
Fig. 3 is a diagram showing an application scenario of a method for disk redirection in another embodiment;
Fig. 4 is a flowchart showing a method for disk redirection in another embodiment;
Fig. 5 is a flowchart showing steps of generating operation content in an embodiment;
Fig. 6 is a flowchart showing steps of sending and receiving data by a preset channel in an embodiment;
Fig. 7 is a flowchart showing steps of file encryption and decryption in an embodiment;
Fig. 8 is a flowchart showing a method for disk redirection in another embodiment;
Fig. 9 is a flowchart showing steps of creating a drive letter in an embodiment;
Fig. 10 is a flowchart showing steps of sending and receiving data through a preset channel in another embodiment;
Fig. 11 is a sequence diagram showing a process of accessing a disk in an embodiment;
Fig. 12 is a sequence diagram showing a process of a file system operation in an embodiment;
Fig. 13 is a flowchart showing a copy-and-paste operation, and a cut-and-paste operation, in an embodiment;
Fig. 14 is a structural block diagram showing an apparatus for disk redirection in an embodiment;
Fig. 15 is a structural block diagram showing a drive letter creation module in an embodiment;
Fig. 16 is a structural block diagram showing an apparatus for disk redirection in another embodiment;
Fig. 17 is a structural block diagram showing an encryption and decryption module in an embodiment;
Fig. 18 is a structural block diagram showing an apparatus for disk redirection in yet another embodiment;
Fig. 19 is a structural block diagram showing an apparatus for disk redirection in yet another embodiment; and
Fig. 20 is a structural block diagram showing an internal structure of a computer apparatus in an embodiment.

### DETAILED DESCRIPTION

In order to make the objectives, technical schemes and advantages of the embodiments of the present disclosure clear, the technical schemes in the embodiments of the present disclosure will be described below with reference to the accompanying drawings in the embodiments of the present disclosure. Apparently, the described embodiments are part of the embodiments of the present disclosure, not all of them. Based on the embodiments of the present disclosure, all other embodiments obtained by those having ordinary skills in the art without creative effort fall within the scope of the present disclosure.

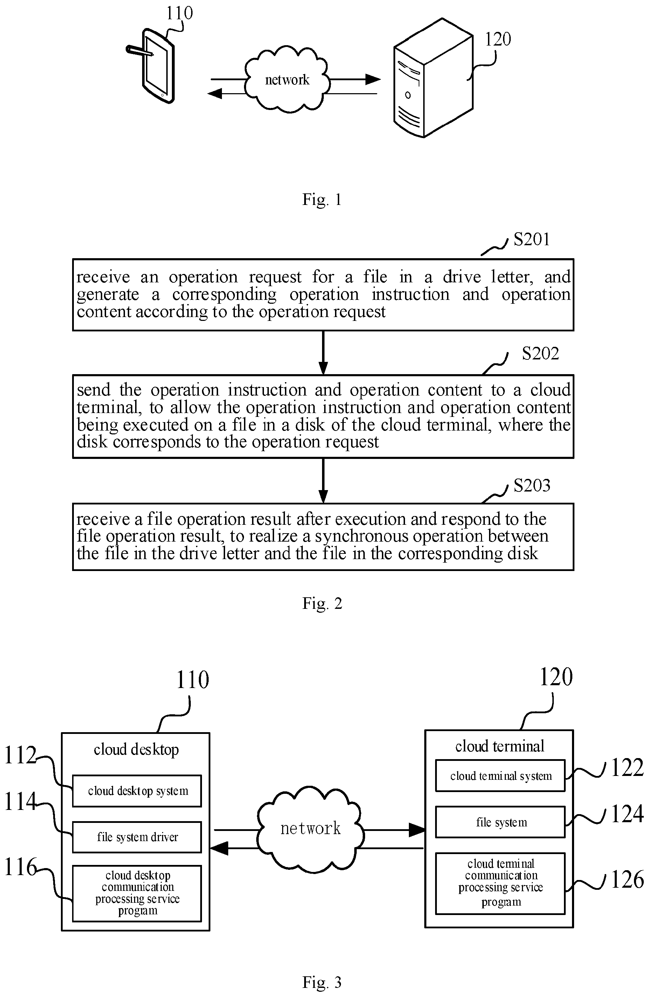

Fig. 1 is a schematic diagram showing an application environment of a method for disk redirection in an embodiment. Referring to Fig. 1, the method for disk redirection is applied to a disk redirection system. The system for disk redirection includes a cloud desktop 110 and a cloud terminal 120. The cloud desktop 110 and the cloud terminal 120 are connected through a network. The cloud desktop 110 receives an operation request for a file in a drive letter, generates a corresponding operation instruction and operation content according to the operation request, and sends the operation instruction and operation content to the cloud terminal 120. The cloud terminal 120 executes the operation instruction and the operation content on a file in a disk corresponding to the operation request. The cloud desktop 110 receives a file operation result after execution and responds to the file operation result, to realize a synchronous operation between the file in the drive letter and the file in the corresponding disk. The cloud desktop mainly distributes cloud resources to respective operating terminals through a virtualized application, and still belongs to the data platform cloud operating system. The cloud terminal 120 can be implemented by an independent terminal or a terminal cluster composed of a plurality of terminals.

As shown in Fig. 2, according to an embodiment, a method for disk redirection is provided. In this embodiment, the method is mainly applied to the cloud desktop 110 in Fig. 1. Referring to Fig. 2, the method for disk redirection includes the following steps.

Step S201: receiving an operation request for a file in a drive letter, and generating a corresponding operation instruction and operation content according to the operation request.

In an embodiment, disk redirection refers to redirecting various requests for files in the disk to other locations for execution. A drive letter refers to an entry created on the cloud desktop for accessing a disk. A file refers to a file stored in the disk, where the file in the disk is stored corresponding to the file in the drive letter. The disk refers to a disk in the cloud terminal. An operation request refers to the user's operation request realized by shortcut key, click and touch, such as creating, opening, reading/writing, renaming and deleting a file in the drive letter; creating, opening, enumerating, renaming and deleting a directory; acquiring and displaying a volume label; acquiring and displaying size and occupancy of a disk space, etc. An operation instruction refers to a computer-executable instruction for creating, opening, reading/writing, renaming and deleting the file; creating, opening, enumerating, renaming and deleting the directory, etc. Operation content refers to one or more files targeted by the operation instruction, where the content of a file may additionally or alternatively include: text information, picture information, audio information, etc.

Step S202: sending the operation instruction and operation content to a cloud terminal, to allow the operation instruction and operation content being executed on a file in a disk of the cloud terminal, where the disk corresponds to the operation request.

In an embodiment, the cloud desktop sends the operation instruction and operation content to the cloud terminal through the network, and the cloud terminal executes the operation instruction and operation content on the file in the disk corresponding to the operation request after receiving the operation instruction and operation content. If the operation instruction is a file creation instruction, the corresponding file is created in the corresponding disk. If the operation instruction is a directory opening instruction, the file directory is opened on the corresponding disk.

Step S203: receiving a file operation result after execution and responding to the file operation result, to realize a synchronous operation between the file in the drive letter and the file in the corresponding disk.

In an embodiment, the file operation result refers to the file status in which the file has changed after the operation instruction and operation content are executed on the file. Responding to the file operation result means that the cloud desktop realizes file synchronization with the cloud terminal. If the operation instruction is a file opening operation instruction, the operation result of the file is to open the file, obtain the file directory list after opening the file, and send the successfully opened and obtained file directory list to the cloud desktop. After receiving the successfully opened and obtained file directory, the cloud desktop responds to file opening in the cloud desktop.

In an embodiment, step S203 further includes displaying the result of the synchronization operation.

In an embodiment, the result of the synchronous operation refers to the desired purpose of the operation request. For example, if the operation request is to open a file A, the result of the corresponding synchronization operation is to open the file A. After opening the file A, the file directory after opening the file A is displayed.

In an embodiment, as shown in Fig. 3, the cloud desktop 110 includes a cloud desktop system 112, a file system driver 114 and a cloud desktop communication processing service program 116. The cloud terminal 120 includes a cloud terminal system 122, a file system 124 and a cloud terminal communication processing service program 126. The cloud desktop system 110 can be a Windows system or a Linux system.

When a user operates a file in the cloud desktop system, the file system driver receives an operation request from the cloud desktop system for a file system device (such as creating, opening, reading/writing, renaming and deleting a file; creating, opening, enumerating, renaming and deleting a directory; acquiring and displaying a volume label; acquiring and displaying size and occupancy of a disk space, etc.). The file system driver forwards the operation request for the file system device to the cloud desktop communication processing service program in the form of operation instruction plus operation content. The cloud desktop communication processing service program sends the operation instruction and operation content to the cloud terminal communication processing service program. The cloud terminal communication processing service program submits the received operation instruction and the operation content to the file system for processing. The file system executes the corresponding operation instruction and operation content in the corresponding disk, obtains the file operation result after execution, and returns the file operation result to the cloud terminal communication processing service program. The cloud terminal communication processing service program returns the file operation result to the cloud desktop communication processing service program. The cloud desktop communication processing service program receives the returned file operation result and responds to the file system driver to complete the operation request of the cloud desktop system to the file system device.

According to the above method for disk redirection, by receiving an operation request for a file in a drive letter, generating a corresponding operation instruction and operation content according to the operation request, sending the operation instruction and operation content to the cloud terminal so as to execute the operation instruction and operation content on the file in the disk of the cloud terminal corresponding to the operation request, receiving a file operation result after execution, and responding to the file operation result, a synchronous operation between the file in the drive letter and the file in the corresponding disk is realized. Therefore, the cloud desktop generates the corresponding operation instruction and operation content according to the operation request, sends the generated operation instruction and operation content to the cloud terminal for execution in the cloud, receives the executed file processing result, and enables the cloud desktop to realize the operation request according to the file processing result, thus improving the network adaptability of disk redirection and reducing the network maintenance cost.

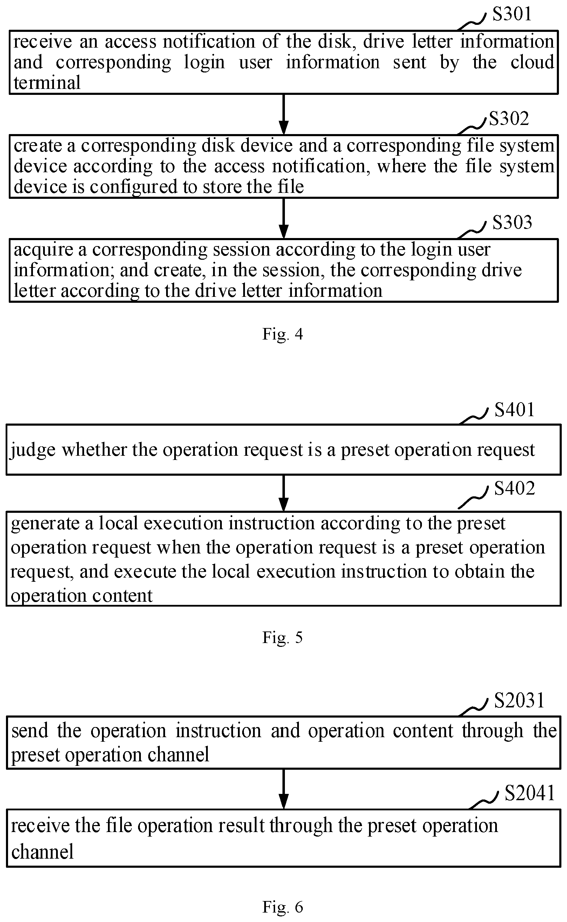

In an embodiment, as shown in Fig. 4, before step S201, the method further includes step S301: receiving an access notification of the disk, drive letter information and corresponding login user information sent by the cloud terminal; step S302: creating a corresponding disk device and a corresponding file system device according to the access notification, where the file system device is configured to store the file; step S303: acquiring a corresponding session according to the login user information; and creating, in the session, the corresponding drive letter according to the drive letter information.

In an embodiment, the disk access notification refers to the notification of a disk accessible by the cloud terminal, and the drive letter information refers to information for describing the drive letter, including identification information of the drive letter, etc. Login user information refers to the information of a user logging into the cloud desktop and cloud terminal, and the user message includes but is not limited to the information such as user authority and user identification. The cloud desktop receives the disk access notification, drive letter information and corresponding login user information sent by the cloud terminal through the network. After receiving the disk access notification, the cloud desktop creates a disk device and a file system device corresponding to the access notification, where the disk device is a device for storing a drive letter and the file system device is a device for storing a file. The cloud desktop acquires a corresponding session according to the login user information, where the session refers to a system session. For example, if a system contains multiple users, each user will enter the user's system session after logging in to the user account. For the convenience of understanding, the following is an example of PC containing two different users. Suppose there are two users, user A and user B. User A enters the session of user A after logging in to the system, and user B enters the session of user B after logging in to the system. The cloud desktop creates a drive letter in the user's session according to the user's drive letter information. Different users create drive letters in their own sessions, which avoids confusion of drive letters and improves information security.

In an embodiment, as shown in Fig. 5, the above method for disk redirection further includes step S401: judging whether the operation request is a preset operation request.

In this embodiment, generating corresponding operation content according to the operation request includes step S402: when the operation request is a preset operation request, generating a corresponding local execution instruction according to the preset operation request, and executing the local execution instruction to obtain the operation content.

In an embodiment, the preset operation request includes a copy-and-paste operation request and a cut-and-paste operation request. The cloud desktop is provided with an operation instruction detection program. When the detection program detects that the operation instruction is a preset operation request, it means that the instruction detected by the operation instruction detection program is a copy-and-paste operation request or a cut-and-paste operation request. The detection program can use system commands to monitor these operation requests, such as using "HOOK" to monitor an operation request of copy-and-paste or cut-and-paste. The local execution instruction refers to the instruction executed on the cloud desktop, and the operation content is the operation content obtained after the local instruction is executed.

In an embodiment, a preset operation channel is preset between the cloud terminal and the cloud desktop. as shown in Fig. 6, sending the operation instruction and operation content to the cloud terminal includes step S2031: sending the operation instruction and operation content through a preset operation channel.

In this embodiment, receiving the file operation result after execution includes step S2041: receiving the file operation result through the preset operation channel.

In an embodiment, the operation instruction and the operation content are sent to the cloud terminal through a preset channel, the operation instruction and the operation content are executed at the cloud terminal to obtain a corresponding file operation result, and the file operation result is sent to the cloud desktop through the preset channel.

The preset channel is a fast channel between the cloud terminal and the cloud desktop, through which copy-and-paste and cut-and-paste operations are transmitted and returned. Copy-and-paste and cut-and-paste operation requests can also be received in the file system driver of the cloud desktop. In order to avoid repeating the copy-and-paste and cut-and-paste operations, the copy-and-paste and cut-and-paste operation requests from the file system driver are ignored. Transmission and return through the preset channel can reduce the division of copy-and-paste and cut-and-paste operation instructions into multiple corresponding sub-operation instructions in the actual operation process, thus improving the data processing rate.

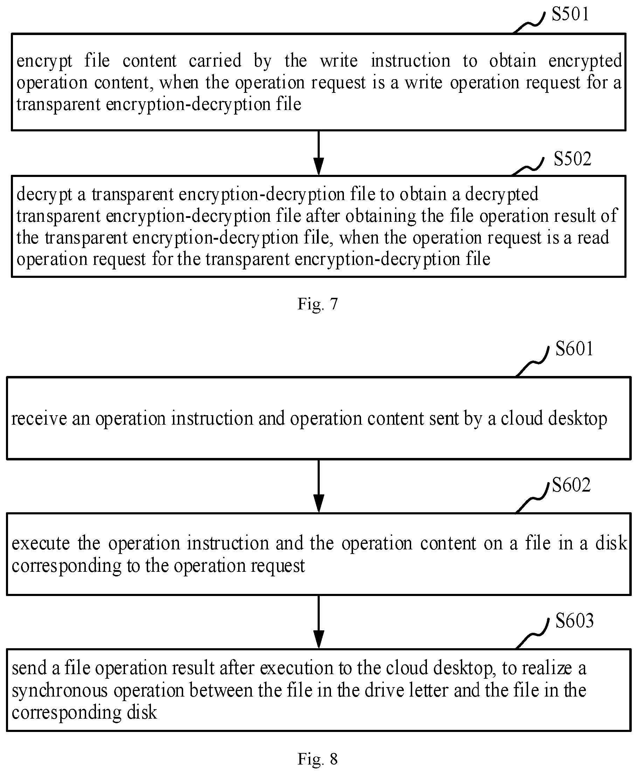

In an embodiment, as shown in Fig. 7, the above method for disk redirection further includes step S501: encrypting file content carried by the write instruction to obtain encrypted operation content, when the operation request is a write operation request for a transparent encryption-decryption file.

In an embodiment, the transparent encryption-decryption file refers to: the encryption and decryption process is automatically performed in the background of the system, without the user's participation, and the user does not need to learn how to encrypt and decrypt files; what the user sees and operates at any time is the original file (transparent), that is, the encryption and decryption process is transparent to the user. When receiving a write operation request for a transparent encrypted-decrypted file, encrypting the file content corresponding to the write instruction to obtain encrypted operation content. In an embodiment, the transparent encryption-decryption file is identified and marked when it is written.

Step S502: decrypting a transparent encryption-decryption file to obtain a decrypted transparent encryption-decryption file after obtaining the file operation result of the transparent encryption-decryption file, when the operation request is a read operation request for the transparent encryption-decryption file.

In an embodiment, when the operation request is a read operation request for a transparent encryption-decryption file, the cloud terminal executes a read operation instruction and returns the transparent encryption-decryption file to the cloud desktop, and the cloud desktop decrypts the returned transparent encryption-decryption file to obtain a decrypted transparent encryption-decryption file. In an embodiment, the transparent encryption-decryption file is identified and marked when it is read.

As shown in Fig. 8, in an embodiment, a method for disk redirection is provided. In this embodiment, the method is mainly applied to the cloud terminal 120 in Fig. 1 as an example. Referring to Fig. 8, the method for disk redirection includes the following steps.

Step S601: receiving an operation instruction and operation content sent by a cloud desktop.

In this embodiment, the operation instruction and the operation content are generated according to an operation request for a file in a drive letter of the cloud desktop.

Step S602: executing the operation instruction and the operation content on a file in a disk corresponding to the operation request.

Step S603: sending a file operation result after execution to the cloud desktop, to realize a synchronous operation between the file in the drive letter and the file in the corresponding disk.

In an embodiment, the operation instruction refers to a computer executable instruction for creating, opening, reading/writing, renaming and deleting a file, and creating, opening, enumerating, renaming and deleting a directory. The operation content refers to one or more files targeted by an operation instruction, where the content of a file may additionally or alternatively include: text information, picture information, audio information, etc. The cloud terminal receives the operation instruction and the operation content sent by the cloud desktop through the network. After receiving the operation instruction and the operation content, the cloud terminal executes, in the disk, the operation instruction and the operation content on the file corresponding to the file in the drive letter, to obtain the corresponding file operation result. The file operation result is a file status after the file is changed after the operation instruction and operation content are executed. For example, if the operation instruction is a delete instruction and the operation content is document A, the changed file status is: document A is deleted. The cloud desktop subsequently sends an operation instruction to re-enumerate the directory of the folder where the document A is located, which shows that the directory of the folder where the document A is located no longer contains the document A. The result of the synchronous operation refers to the desired purpose of the operation request. For example, if the operation request is to open folder A, the result of the corresponding synchronization operation is that folder A is opened. The cloud desktop subsequently sends an operation request to enumerate the directory where the folder A is located, and after the folder A is opened, the files in the folder A directory are displayed.

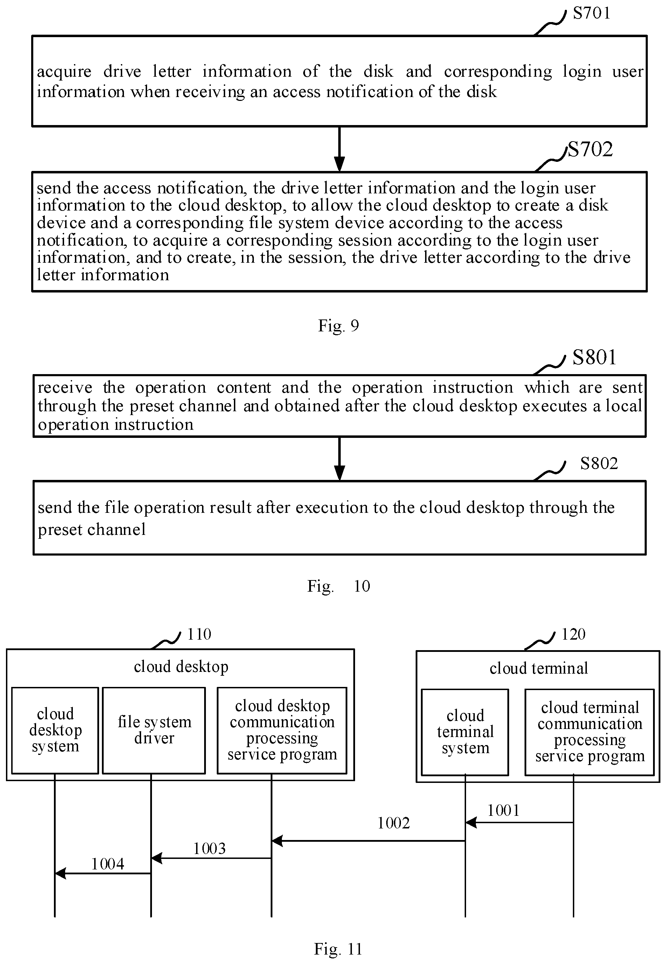

In an embodiment, as shown in Fig. 9, before step S601, the method further includes the following steps. Step S701: acquiring drive letter information of the disk and corresponding login user information when receiving an access notification of the disk. Step S702: sending the access notification, the drive letter information and the login user information to the cloud desktop, to allow the cloud desktop to create a disk device and a corresponding file system device according to the access notification, to acquire a corresponding session according to the login user information, and to create the drive letter according to the drive letter information based on the session.

In an embodiment, the disk access notification refers to the notification of a disk accessible by the cloud terminal, and the drive letter information refers to information for describing the drive letter, including identification information of the drive letter, etc. Login user information refers to the information of a user logging into the cloud desktop and cloud terminal, and the user message includes but is not limited to the information such as user authority and user identification. The cloud terminal sends the disk access notification, drive letter information and corresponding login user information to the cloud desktop through the network. After receiving the disk access notification, the cloud desktop creates a disk device and a file system device corresponding to the access notification, where the disk device is a device for storing a drive letter and the file system device is a device for storing a file. The cloud desktop acquires a corresponding session according to the login user information, where the session refers to a system session. Different users create drive letters in their own sessions, which avoids confusion of drive letters and improves information security.

In an embodiment, a preset operation channel is preset between the cloud terminal and the cloud desktop; As shown in Fig. 10, receiving the operation content sent by the cloud desktop includes step S801: receiving the operation content and the operation instruction which are sent through the preset channel and obtained after the cloud desktop executes a local operation instruction.

In this embodiment, the local operation instruction is generated according to a preset operation request including a copy-and-paste operation request and a cut-and-paste operation request.

Sending the file operation result after execution to the cloud desktop includes step S802: sending the file operation result after execution to the cloud desktop through the preset channel.

In an embodiment, the preset operation request includes a copy-and-paste operation request and a cut-and-paste operation request. The cloud desktop is provided with an operation instruction detection program. When the detection program detects that the operation instruction is a preset operation request, it means that the instruction detected by the operation instruction detection program is a copy-and-paste operation request or a cut-and-paste operation request. The detection program can use system commands to monitor these operation requests, such as using "HOOK" to monitor an operation request of copy-and-paste or cut-and-paste. The local execution instruction refers to the instruction executed on the cloud desktop, and the operation content is the operation content obtained after the local instruction is executed.

The cloud terminal receives the operation instruction and operation content sent by the cloud desktop through the preset channel, executes the operation instruction and operation content to obtain the corresponding file operation result, and sends the file operation result to the cloud desktop through the preset channel. The preset channel is a fast channel between the cloud terminal and the cloud desktop, through which copy-and-paste and cut-and-paste operations are transmitted and returned. Copy-and-paste and cut-and-paste operation requests can also be received in the file system driver of the cloud desktop. In order to avoid repeating the copy-and-paste and cut-and-paste operations, the copy-and-paste and cut-and-paste operation requests from the file system driver are ignored. Transmission and return through the preset channel can reduce the division of copy-and-paste and cut-and-paste operation instructions into multiple corresponding sub-operation instructions in the actual operation process, thus improving the data processing rate.

In an embodiment, the above method for disk redirection further includes step S901 of establishing a disk synchronization thread.

In an embodiment, the disk synchronization thread is configured to synchronize the file after executing the operation instruction to the disk, that is, after the file modification is completed, synchronize the modified file data to the disk.

In an embodiment, a method for disk redirection is provided, which is applied to a system for disk redirection. Referring to Fig. 3, the system includes a cloud desktop 110 and a cloud terminal 120. The method for disk redirection includes the following steps.

Referring to Fig. 11, Fig. 11 is a sequence diagram showing a process of accessing a disk.

At step 1001, a cloud terminal communication processing service program obtains a terminal operating system event when a disk is accessed, and obtains drive letter information of the disk according to event information.

At step 1002, the cloud terminal communication processing service program sends the disk access notification, the drive letter information of the disk and current login user information of the cloud terminal to a cloud desktop communication processing service program.

At step 1003, the cloud desktop communication processing service program forwards the disk access notification, the current login user information and the drive letter information to a file system driver.

At step 1004, after receiving the disk access notification forwarded from the cloud terminal by the cloud desktop communication processing service program, the file system driver creates a disk device and a file system device corresponding to the disk device, and then obtains a corresponding session according to the login user information of the cloud terminal, and creates a drive letter in the corresponding session.

In this embodiment, the cloud terminal executing the disk access initiatively initiates a request, and the cloud desktop operated by a user accepts the request to create the drive letter, and then performs file system filtering and transparent I/O operation on the drive letter, which can adapt to various network environments without network penetration, and the created drive letter also conforms to the user's usage habits and is convenient to use.

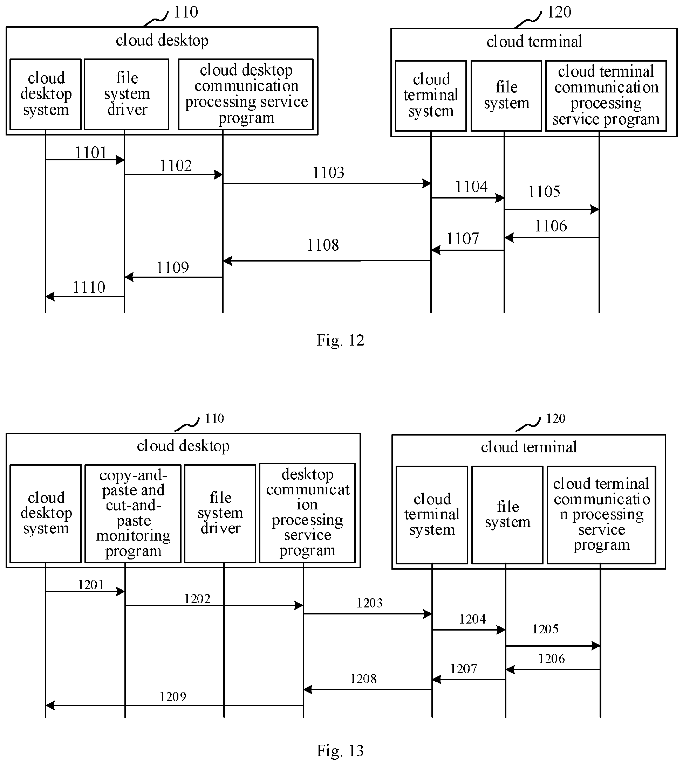

Referring to Fig. 12, Fig. 12 is a sequence diagram showing a process of a file system operation.

At step 1101, a user operates a file on a cloud desktop system, and a file system driver receives an operation request for a file system device from the cloud desktop system, such as creating, opening, reading/writing, renaming and deleting a file; creating, opening, enumerating, renaming and deleting a directory; acquiring and displaying a volume label; acquiring and displaying size and occupancy of a disk space.

At step 1102, the file system driver forwards the operation request for the file system device to the cloud desktop communication processing service program in the form of an operation instruction plus operation content.

At step 1103, the cloud desktop communication processing service program sends the operation instruction and operation content to the cloud terminal communication processing service program.

At step 1103a, when encountering an operation request for a file by an unauthorized user in multi-user isolation, a process access that does not conform to the permission rule, a write operation for a file or directory that conforms to the read-only rule, or a write operation for the entire disk, a failure response can be directly returned to the file system driver without forwarding the operation request to the cloud terminal communication processing service program for processing.

At step 1103b, a transparent encrypted-decrypted file is identified when being written, and the file content carried by the write instruction is encrypted before being forwarded to the cloud terminal communication processing service program.

At step 1104, the cloud terminal communication processing service program receives the operation instruction and operation content sent from the cloud desktop communication processing service program, and submits the operation instruction and operation content to the file system for processing.

At step 1105, the file system executes a corresponding operation in the corresponding disk according to the operation instruction and operation content forwarded by the cloud terminal communication processing service program. At the same time, a thread is created at the cloud terminal to synchronize the modified file data in the memory to the disk after the file modification is completed in sequence.

At step 1106, after the operation is executed, the file system obtains a file operation result.

At step 1107, the file system returns the file operation result to the cloud terminal communication processing service program.

At step 1108, the cloud terminal communication processing service returns the file operation result to the cloud desktop communication processing service.

At step 1109, the cloud desktop communication processing service program receives the file operation result returned from the cloud terminal communication processing service program and responds at the file system driver.

At step 1109a, when enumerating the returned file operation results, the screened and hidden files or directories are filtered, and only the filtered results are returned to the file system driver.

At step 1109b, when reading the transparent encryption-decryption file, the transparent encryption-decryption file is identified and marked; the file content returned after executing the read instruction is decrypted and then responded at the file system driver.

At step 1110, at the file system driver, the operation request of the cloud desktop system to the file system device is completed.

The above method for disk redirection can efficiently meet the use requirements of disk redirection and USB mass storage device redirection on cloud desktop, save user resources, and meet the requirements of users. At the same time, the method has no special requirements for the user's use environment, has low maintenance cost, and is convenient for the popularization of cloud desktops. Based on file-level filtering, extended functions of deep embedding can be provided through configuration, such as multi-user isolation, read-only of files or directories conforming to specific rules or the whole disk, screening, transparent encryption and decryption, and encrypted storage on the terminal side. Clear text is seen on the cloud desktop side, and the software can be used normally. Access is allowed for processes that conform to specific rules, while access is not allowed for processes that do not conform to specific rules, and so on.

In an embodiment, a method for disk redirection involving copy-and-paste and cut-and-paste operations is provided. Referring to Fig. 13, Fig. 13 is a flow chart of the implementation of copy-and-paste and cut-and-paste operations. The implementation of copy-and-paste and cut-and-paste operations differs from general file system operations in that the copy-and-paste and cut-and-paste monitoring program for files and directories directly informs the communication processing service program, and the communication processing service program preferentially processes the copy-and-paste or cut-and-paste operations by using a preset channel. During the operation, the related read-write operations from the file system driver are directly returned by the communication processing service program according to the processing progress of the preset channel. The method includes the following steps.

At step 1201, a user requests a copy-and-paste operation or a cut-and-paste operation, and the copy-and-paste and cut-and-paste monitoring program module of files and directories monitors a copy-and-paste event or a cut-and-paste event. When judging that the source or target of the event points to a designated drive letter, the monitoring program module notifies the cloud desktop communication processing service program of the event and the source and target information of the event for processing. The designated drive letter refers to the drive letter of the disk created in step 1004 with the currently logged-in user and corresponding to the cloud terminal.

At step 1202, the cloud desktop communication processing service program divides the operation into cloud desktop side operation and cloud terminal side operation for the copy-and-paste or cut-and-paste notification of files or directories received from the copy-and-paste and cut-and-paste monitoring program of files and directories. For the copy-and-paste event, when the source of the event points to a designated drive letter, the cloud desktop communication processing service program can divide the operation into: the creation and writing of a file on the cloud desktop, or the creation of a directory on the cloud desktop; reading and opening a file on the cloud terminal, or opening and enumerating a directory on the cloud terminal. For the cut-and-paste event, when the source of the event points to a designated drive letter, the cloud desktop communication processing service program can divide the operation into: creation and writing of a file on the cloud terminal, creation of a directory on the cloud terminal, etc.; reading, opening and deleting a file on the cloud desktop, or opening, enumerating and deleting a directory on the cloud desktop, etc.

At steps 1203 to 1208, the cloud desktop communication processing service program screens the requests from the file system driver. In case of a copy-and-paste or cut-and-paste notification request for a file or directory, "Success" will be directly returned according to the progress of the copy-and-paste and cut-and-paste processing channel, and will not be sent to the cloud terminal communication processing service program for repeated processing. Other requests are handled by common file system operations.

At step 1203, a preset channel is established between the cloud desktop communication processing service program and the cloud terminal communication processing service program. If a destination of an event points to a designated drive letter, an operation on the cloud desktop is executed first, and then an operation instruction for the cloud terminal is sent to the cloud terminal communication processing service program. If the operation instruction is to create and write a file, file content is obtained from the cloud desktop and directly transmitted to the cloud terminal through the preset channel until the file operation ends. If the operation instruction is to read and open a file, a file is created on the cloud desktop, and then wait for received file content to be written into the file on the cloud desktop until the file operation ends. Other operation requests, such as deleting a file or creating, opening, enumerating and deleting a directory, are sent to the cloud terminal communication processing service program in the form of an operation instruction plus operation content.

At step 1204, the cloud terminal communication processing service program schedules the file system for priority processing according to the operation request via the preset channel.

At step 1205, the file system executes the corresponding operation in the disk corresponding to the operation request according to the operation instruction and operation content forwarded by the cloud terminal communication processing service program. At the same time, a thread is created in the cloud terminal to wait for the file modification to be completed in sequence and then synchronize the modified file data in the memory to the storage device.

At step 1206, after the operation is executed, the file system obtains a file operation result.

At step 1207, the file system returns the file operation result to the cloud terminal communication processing service program.

At step 1208, the cloud terminal communication processing service program returns the file operation result to the cloud desktop communication processing service program through the copy-and-paste and cut-and-paste processing channel.

At step 1209, if the source of the event points to a designated drive letter, the cloud desktop communication processing service program executes a corresponding cloud desktop operation divided from the copy-and-paste or cut-and-paste notification.

The above method for disk redirection can respond to the necessary requests of the file system, in which it can respond to resource occupation, for example, respond to lightweight requests such as network resource occupation, disk I/O, memory and processor resource occupation at both ends, etc., and further realize fast transmission and return for copy-and-paste, cut-and-paste operations of files and directories.

Figs. 2, 4 to 10 are flow charts of a method for disk redirection in an embodiment. It should be understood that although the steps in the flowcharts of figs. 2, 4 to 10 are displayed in sequence as indicated by arrows, these steps are not necessarily executed in sequence as indicated by arrows. It should be noted that the execution of these steps is not limited in order, and these steps can be executed in other orders. Furthermore, at least some of the steps in figs. 2, 4 - 10 may include a plurality of sub-steps or stages, which may not necessarily be completed at the same time, but may be executed at different times, and the execution sequence of these sub-steps or stages may not necessarily be carried out sequentially, but may be executed in turn or alternately with other steps or at least a part of sub-steps or stages of other steps.

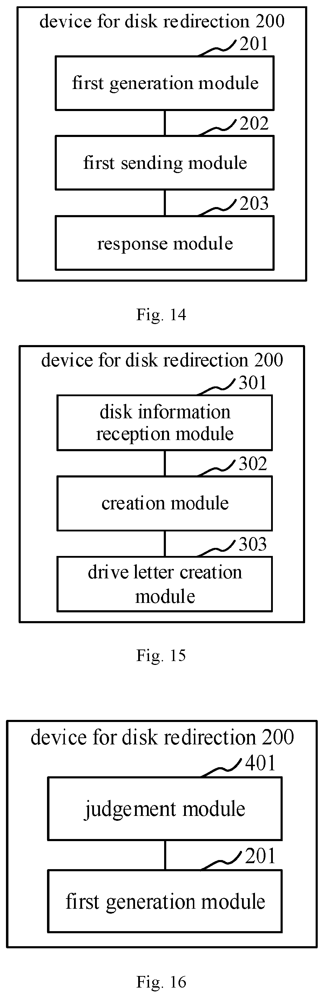

In an embodiment, as shown in Fig. 14, an device 200 for disk redirection is provided, which includes: a first generation module 201 configured to receive an operation request for a file in a drive letter and generate a corresponding operation instruction and operation content according to the operation request; a first sending module 202 configured to send the operation instruction and operation content to a cloud terminal, to allow the operation instruction and operation content being executed on a file in a disk of the cloud terminal, where the disk corresponds to the operation request; and a response module 203 configured to receive a file operation result after execution and respond to the file operation result, to realize a synchronous operation between the file in the drive letter and the file in the corresponding disk.

In an embodiment, as shown in Fig. 15, the above device 200 for disk redirection further includes a disk information reception module 301 configured to receive an access notification of the disk, drive letter information and corresponding login user information sent by the cloud terminal; a creation module 302, configured to create a corresponding disk device and a corresponding file system device according to the access notification, where the file system device is configured to store the file; a drive letter creation module 303, configured to acquire a corresponding session according to the login user information; and create, in the session, the corresponding drive letter according to the drive letter information.

In an embodiment, as shown in Fig. 16, the above device 200 for disk redirection further includes a judgement module 401 configured to judge whether the operation request is a preset operation request, where the preset operation request includes a copy-and-paste operation request and a cut-and-paste operation request. The first generation module 201 is further configured to generate a local execution instruction according to the preset operation request when the operation request is a preset operation request, and execute the local execution instruction to obtain the operation content. In an embodiment, a preset operation channel is preset between the cloud terminal and the cloud desktop, and the first sending module 202 is further configured to send the operation instruction and operation content through the preset operation channel.

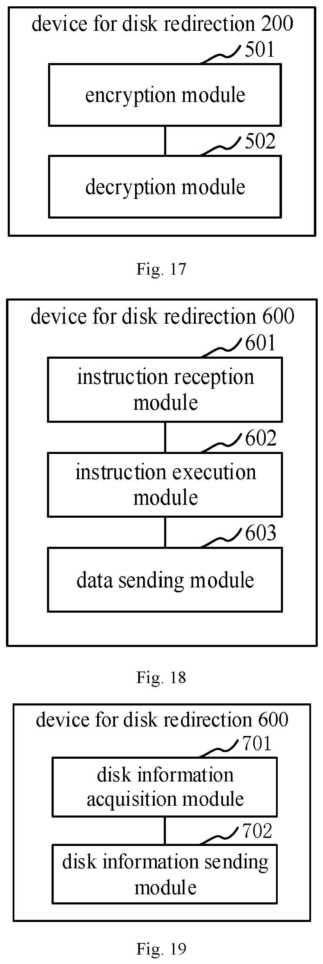

The response module 203 is also configured to receive the file operation result through the preset operation channel. In an embodiment, as shown in Fig. 17, the above device 200 for disk redirection further includes an encryption module 501 configured to encrypt file content carried by the write instruction to obtain encrypted operation content, when the operation request is a write operation request for a transparent encryption-decryption file; a decryption module 502, configured to decrypt a transparent encryption-decryption file to obtain a decrypted transparent encryption-decryption file after obtaining the file operation result of the transparent encryption-decryption file, when the operation request is a read operation request for the transparent encryption-decryption file.

In an embodiment, as shown in Fig. 18, an device 600 for disk redirection is provided, which includes an instruction reception module 601 configured to receive an operation instruction and operation content sent by a cloud desktop, where the operation instruction and the operation content are generated according to an operation request for a file in a drive letter of the cloud desktop; an instruction execution module 602 configured to execute the operation instruction and the operation content on a file in a disk corresponding to the operation request; and a data sending module 603 configured to send a file operation result after execution to the cloud desktop, to realize a synchronous operation between the file in the drive letter and the file in the corresponding disk.

In an embodiment, as shown in Fig. 19, the above device 600 for disk redirection further includes a disk information acquisition module 701 configured to acquire drive letter information of the disk and corresponding login user information when receiving an access notification of the disk; a disk information sending module 702 is configured to send the access notification, the drive letter information and the login user information to the cloud desktop, to allow the cloud desktop to create a disk device and a corresponding file system device according to the access notification, to acquire a corresponding session according to the login user information, and to create, in the session, the drive letter according to the drive letter information.

In an embodiment, a preset operation channel is preset between the cloud terminal and the cloud desktop.

The instruction reception module 601 is further configured to receiving the operation content and the operation instruction which are sent through the preset channel and obtained after the cloud desktop executes a local operation instruction, where the local operation instruction is generated according to a preset operation request including a copy-and-paste operation request and a cut-and-paste operation request.

The data sending module 603 is further configured to send the file operation result after execution to the cloud desktop through the preset channel.

In an embodiment, the above device 600 for disk redirection further includes a thread establishment module configured to establishing a disk synchronization thread for synchronizing the file, on which the operation instruction is executed, to the disk.

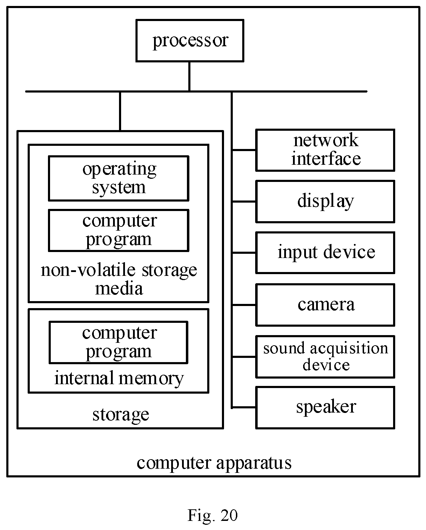

Fig. 20 shows the internal structure of a computer apparatus in an embodiment. The computer apparatus may be the cloud desktop 110 or the cloud terminal 120 in Fig. 1. As shown in Fig. 20, the computer apparatus includes a processor, a memory, a network interface, an input device and a display screen connected through a system bus. The memory includes a nonvolatile storage medium and an internal memory. The nonvolatile storage medium of the computer apparatus stores an operating system, and can also store a computer program, which, when executed by a processor, causes the processor to implement the method for disk redirection. A computer program can also be stored in the internal memory, which, when executed by the processor, can cause the processor to execute the method for disk redirection. The display screen of the computer apparatus can be a liquid crystal display screen or an electronic ink display screen. The input device of the computer apparatus can be a touch layer covering the display screen; keys, trackballs or touch pads arranged on the shell of computer apparatus; external keyboard, touchpad or mouse, etc.

It can be understood by those having ordinary skills in the art that the structure shown in Fig. 20 is only a block diagram of some structures related to the technical scheme of the present disclosure, and does not constitute a limitation on the computer apparatus to which the technical scheme of the present disclosure applies. the computer apparatus may include more or fewer components than those shown in the figure, or combine some components, or have different component arrangements.

In an embodiment, the device 200 for disk redirection and the device 600 for disk redirection provided by the present disclosure can be implemented in the form of a computer program, which can be run on a computer apparatus as shown in Fig. 20. The memory of the computer apparatus can store respective program modules constituting the device for disk redirection, such as a first generation module 201, a first sending module 202B and a response module 203 shown in Fig. 14. A computer program constituted by the respective program modules causes the processor to execute the steps in the method for disk redirection of the respective embodiments of the present disclosure described in this description.

For example, the computer apparatus shown in Fig. 20 can receive an operation request for a file in a drive letter through the first generation module 201 in the device for disk redirection 200 shown in Fig. 14, and generate a corresponding operation instruction and operation content according to the operation request. The computer apparatus can send the operation instruction and operation content to the cloud terminal through the first sending module 202, to allow the operation instruction and operation content being executed on a file in a disk of the cloud terminal, where the disk corresponds to the operation request. The computer apparatus can receive a file operation result after execution through the response module 203, and respond to the file operation result, to realize a synchronous operation between the file in the drive letter and the file in the corresponding disk.

In an embodiment, a computer apparatus is provided, which includes a memory, a processor and a computer program stored in the memory and executable by the processor. When the processor executes the computer program, the following steps are implemented: receiving an operation request for a file in a drive letter, and generating a corresponding operation instruction and operation content according to the operation request; sending the operation instruction and operation content to a cloud terminal, to allow the operation instruction and operation content being executed on a file in a disk of the cloud terminal, where the disk corresponds to the operation request; and receiving a file operation result after execution and responding to the file operation result, to realize a synchronous operation between the file in the drive letter and the file in the corresponding disk.

In an embodiment, before receiving the operation request for the file in the drive letter, the following steps are also implemented when the processor executes the computer program: receiving an access notification of the disk, drive letter information and corresponding login user information sent by the cloud terminal; creating a corresponding disk device and a corresponding file system device according to the access notification, where the file system device is configured to store the file; acquiring a corresponding session according to the login user information; and creating, in the session, the corresponding drive letter according to the drive letter information.

In an embodiment, when the processor executes the computer program, the following steps are also implemented: judging whether the operation request is a preset operation request, where the preset operation request includes a copy-and-paste operation request and a cut-and-paste operation request; and generating a local execution instruction according to the preset operation request when the operation request is a preset operation request; and executing the local execution instruction to obtain the operation content.

In an embodiment, a preset operation channel is preset between the cloud terminal and the cloud desktop, the operation instruction and operation content are sent through the preset operation channel; receiving the file operation result after execution includes: receiving the file operation result through the preset operation channel.

In an embodiment, the operation instruction includes a write instruction, and before sending the operation instruction and operation content to the cloud terminal, the following steps are also implemented when the processor executes the computer program: encrypting file content carried by the write instruction to obtain encrypted operation content, when the operation request is a write operation request for a transparent encryption-decryption file; and decrypting a transparent encryption-decryption file to obtain a decrypted transparent encryption-decryption file after obtaining the file operation result of the transparent encryption-decryption file, when the operation request is a read operation request for the transparent encryption-decryption file.

In an embodiment, a computer-readable storage medium is provided, on which a computer program is stored. When the computer program is executed by a processor, the following steps are implemented: receiving an operation request for a file in a drive letter, and generating a corresponding operation instruction and operation content according to the operation request; sending the operation instruction and operation content to a cloud terminal, to allow the operation instruction and operation content being executed on a file in a disk of the cloud terminal, where the disk corresponds to the operation request; and receiving a file operation result after execution and responding to the file operation result, to realize a synchronous operation between the file in the drive letter and the file in the corresponding disk.

In an embodiment, before receiving the operation request for the file in the drive letter, the following steps are also implemented when the processor executes the computer program: receiving an access notification of the disk, drive letter information and corresponding login user information sent by the cloud terminal; creating a corresponding disk device and a corresponding file system device according to the access notification, where the file system device is configured to store the file; acquiring a corresponding session according to the login user information; and creating, in the session, the corresponding drive letter according to the drive letter information.

In an embodiment, when the processor executes the computer program, the following steps are also implemented: judging whether the operation request is a preset operation request, where the preset operation request includes a copy-and-paste operation request and a cut-and-paste operation request; and generating a local execution instruction according to the preset operation request when the operation request is a preset operation request; and executing the local execution instruction to obtain the operation content.

In an embodiment, a preset operation channel is preset between the cloud terminal and the cloud desktop, the operation instruction and operation content are sent through the preset operation channel; receiving the file operation result after execution includes: receiving the file operation result through the preset operation channel.

In an embodiment, the operation instruction includes a write instruction, and before sending the operation instruction and operation content to the cloud terminal, the following steps are also implemented when the processor executes the computer program: encrypting file content carried by the write instruction to obtain encrypted operation content, when the operation request is a write operation request for a transparent encryption-decryption file; and decrypting a transparent encryption-decryption file to obtain a decrypted transparent encryption-decryption file after obtaining the file operation result of the transparent encryption-decryption file, when the operation request is a read operation request for the transparent encryption-decryption file.

For example, the computer apparatus shown in Fig. 20 can receive an operation instruction and operation content sent by a cloud desktop through the instruction reception module 601 in the device for disk redirection 600 shown in Fig. 18, where the operation instruction and the operation content are generated according to an operation request for a file in a drive letter of the cloud desktop. The computer apparatus can execute the operation instruction and the operation content on a file in a disk corresponding to the operation request through the instruction execution module 602. The computer apparatus can send a file operation result after execution to the cloud desktop through the data sending module 603, to realize a synchronous operation between the file in the drive letter and the file in the corresponding disk.

In an embodiment, a computer apparatus is provided, which includes a memory, a processor and a computer program stored in the memory and executable by the processor. When the processor executes the computer program, the following steps are implemented: receiving an operation instruction and operation content sent by a cloud desktop, where the operation instruction and operation content are generated according to an operation request for a file in a drive letter of the cloud desktop; executing the operation instruction and the operation content on a file in a disk corresponding to the operation request; and sending a file operation result after execution to the cloud desktop, to realize a synchronous operation between the file in the drive letter and the file in the corresponding disk.

In an embodiment, before receiving the operation instruction and the operation content sent by the cloud desktop, the following steps are also implemented when the processor executes the computer program: acquiring drive letter information of the disk and corresponding login user information when receiving an access notification of the disk; and sending the access notification, the drive letter information and the login user information to the cloud desktop, to allow the cloud desktop to create a disk device and a corresponding file system device according to the access notification, to acquire a corresponding session according to the login user information, and to create, in the session, the drive letter according to the drive letter information.

In an embodiment, a preset operation channel is preset between the cloud terminal and the cloud desktop. Receiving the operation content sent by the cloud desktop includes: receiving the operation content and the operation instruction which are sent through the preset channel and obtained after the cloud desktop executes a local operation instruction, where the local operation instruction is generated according to a preset operation request including a copy-and-paste operation request and a cut-and-paste operation request. Sending the file operation result after execution to the cloud desktop includes: sending the file operation result after execution to the cloud desktop through the preset channel.

In an embodiment, when the processor executes the computer program, the following step is also implemented: establishing a disk synchronization thread for synchronizing the file, on which the operation instruction is executed, to the disk.

In an embodiment, a computer-readable storage medium is provided, on which a computer program is stored. When the computer program is executed by a processor, the following steps are implemented: receiving an operation instruction and operation content sent by a cloud desktop, where the operation instruction and operation content are generated according to an operation request for a file in a drive letter of the cloud desktop; executing the operation instruction and the operation content on a file in a disk corresponding to the operation request; and sending a file operation result after execution to the cloud desktop, to realize a synchronous operation between the file in the drive letter and the file in the corresponding disk.

In an embodiment, before receiving the operation instruction and the operation content sent by the cloud desktop, the following steps are also implemented when the processor executes the computer program: acquiring drive letter information of the disk and corresponding login user information when receiving an access notification of the disk; and sending the access notification, the drive letter information and the login user information to the cloud desktop, to allow the cloud desktop to create a disk device and a corresponding file system device according to the access notification, to acquire a corresponding session according to the login user information, and to create, in the session, the drive letter according to the drive letter information.

In an embodiment, a preset operation channel is preset between the cloud terminal and the cloud desktop. Receiving the operation content sent by the cloud desktop includes: receiving the operation content and the operation instruction which are sent through the preset channel and obtained after the cloud desktop executes a local operation instruction, where the local operation instruction is generated according to a preset operation request including a copy-and-paste operation request and a cut-and-paste operation request. Sending the file operation result after execution to the cloud desktop includes: sending the file operation result after execution to the cloud desktop through the preset channel.

In an embodiment, when the processor executes the computer program, the following step is also implemented: establishing a disk synchronization thread for synchronizing the file, on which the operation instruction is executed, to the disk.

It can be understood by those having ordinary skills in the art that all or some of the steps, systems and functional modules/units in the devices disclosed above can be implemented as software, firmware, hardware and appropriate combinations thereof. In the hardware implementation, the division between functional modules/units mentioned in the above description does not necessarily correspond to the division of physical components. For example, a physical component may have multiple functions, or a function or step may be cooperatively performed by several physical components. Some or all of the physical components may be implemented as software executed by a processor, such as a central processing unit, a digital signal processor or a microprocessor, or as hardware, or as an integrated circuit, such as an application specific integrated circuit. Such software can be distributed on computer-readable media, which can include computer storage medium (or non-transitory media) and communication media (or transitory media). As well known to those of ordinary skill in the art, the term computer storage medium includes volatile and non-volatile, removable and non-removable media implemented in any method or technology for storing information such as computer readable instructions, data structures, program modules or other data. Computer storage medium include but are not limited to RAM, ROM, EEPROM, flash memory or other memory technologies, CD-ROM, digital versatile disk (DVD) or other optical disk storage, magnetic boxes, magnetic tapes, magnetic disk storage or other magnetic storage devices, or any other media that can be used to store desired information and can be accessed by computers. Furthermore, it is well known to those of ordinary skill in the art that communication media typically contain computer readable instructions, data structures, program modules or other data in a modulated data signal such as a carrier wave or other transmission mechanism, and can include any information delivery media.

It should be noted that in the present disclosure, relational terms such as "first" and "second" are only used to distinguish one entity or operation from another, and do not necessarily require or imply any such actual relationship or order between these entities or operations. Furthermore, the terms "comprising", "including" or any other variation thereof are intended to cover non-exclusive inclusion, such that a process, method, article or equipment including a series of elements includes not only those elements, but also other elements not explicitly listed, or elements inherent to such process, method, article or equipment. Without further limitation, the element defined by the sentence "including one ..." does not exclude that there are other identical elements in the process, method, article or equipment including the element.

The above method, device, computer apparatus and storage medium for disk redirection realize a synchronous operation between the file in the drive letter and the file in the corresponding disk, by receiving an operation request for a file in a drive letter, and generating a corresponding operation instruction and operation content according to the operation request; sending the operation instruction and operation content to a cloud terminal, to allow the operation instruction and operation content being executed on a file in a disk of the cloud terminal, where the disk corresponds to the operation request; and receiving a file operation result after execution and responding to the file operation result. Therefore, the network adaptability of disk redirection is improved.

The above method, device, computer apparatus and storage medium for disk redirection realize a synchronous operation between the file in the drive letter and the file in the corresponding disk, by receiving an operation instruction and operation content sent by a cloud desktop, where the operation instruction and operation content are generated according to an operation request for a file in a drive letter of the cloud desktop; executing the operation instruction and the operation content on a file in a disk corresponding to the operation request; and sending a file operation result after execution to the cloud desktop. Therefore, the network adaptability of disk redirection is improved.

The above system for disk redirection includes a cloud terminal and a cloud desktop, where the cloud desktop receives an operation request for a file in a drive letter, generates a corresponding operation instruction and operation content according to the operation request, and sends the operation instruction and operation content to the cloud terminal; the cloud terminal executes the operation instruction and the operation content on a file in a disk corresponding to the operation request; and the cloud desktop receives a file operation result after execution and respond to the file operation result, to realize a synchronous operation between the file in the drive letter and the file in the corresponding disk. Therefore, the network adaptability of disk redirection is improved.

## Claims

1. A method for disk redirection, which is performed by a cloud desktop (110), said method comprising the steps of:
receiving an access notification of a disk, drive letter information and login user information sent by a cloud terminal (S301);
creating a disk device and a file system device according to the access notification, wherein the file system device is configured to store a file (S302);
acquiring a session according to the login user information; and creating, in the session, the drive letter according to the drive letter information (S303);
receiving an operation request for the file in the drive letter, and generating a corresponding operation instruction and operation content according to the operation request (S201);
sending the operation instruction and operation content to the cloud terminal, to allow the operation instruction and operation content being executed on the file in the disk of the cloud terminal, wherein the disk corresponds to the operation request (S202); and
receiving a file operation result after execution and responding to the file operation result, to realize a synchronous operation between the file in the drive letter and the file in the corresponding disk (S203), wherein,
a preset operation channel is preset for a preset operation request between the cloud terminal and the cloud desktop (110).

2. The method of claim 1,
wherein the method further comprises:
judging whether the operation request is a preset operation request, wherein the preset operation request comprises a copy-and-paste operation request-and a cut-and-paste operation request(S40 1);
wherein generating the operation content according to the operation request comprises:
generating a local execution instruction according to the preset operation request in response to the operation request being the preset operation request; and executing the local execution instruction to obtain the operation content (S402).

3. The method of claim 1, wherein, sending the operation instruction and operation content to the cloud terminal comprises:
sending the operation instruction and operation content through the preset operation channel(S2031);
wherein receiving the file operation result after execution comprises:
receiving the file operation result through the preset operation channel (S2041).

4. The method of claim 1, wherein the operation instruction comprises a write instruction, and before sending the operation instruction and operation content to the cloud terminal, the method further comprises:
encrypting file content carried by the write instruction to obtain encrypted operation content, in response to the operation request being a write operation request for a transparent encryption-decryption file (S501); and
decrypting a transparent encryption-decryption file to obtain a decrypted transparent encryption-decryption file after obtaining the file operation result of the transparent encryption-decryption file, in response to the operation request being a read operation request for the transparent encryption-decryption file (S502).

5. A method for disk redirection, which is performed by a cloud terminal (120), said method comprising the steps of:
acquiring (S701) drive letter information of a disk and login user information in response to a reception of an access notification of the disk;
sending (S702) the access notification, the drive letter information and the login user information to a cloud desktop, to allow the cloud desktop to create a disk device and a corresponding file system device according to the access notification, to acquire a corresponding session according to the login user information, and to create, in the session, the drive letter according to the drive letter information;
receiving (S601) an operation instruction and operation content sent by the cloud desktop, wherein the operation instruction and operation content are generated according to an operation request for a file in a drive letter of the cloud desktop;
executing (S602) the operation instruction and the operation content on the file in the disk corresponding to the operation request; and
sending (S603) a file operation result after execution to the cloud desktop, to realize a synchronous operation between the file in the drive letter and the file in the corresponding disk; wherein,
a preset operation channel is preset for a preset operation request between the cloud terminal and the cloud desktop.

6. The method of claim 5, wherein,
receiving the operation content sent by the cloud desktop comprises:
receiving (S801) the operation content and the operation instruction which are sent through the preset channel and obtained after the cloud desktop executes a local operation instruction, wherein the local operation instruction is generated according to the preset operation request comprising a copy-and-paste operation request and a cut-and-paste operation request; and
sending the file operation result after execution to the cloud desktop comprises:
sending the file operation result after execution to the cloud desktop through the preset channel (S802).

7. The method of claim 5, further comprising:
establishing a disk synchronization thread for synchronizing the file, on which the operation instruction is executed, to the disk.

8. A system for disk redirection, comprising a cloud terminal (120) and a cloud desktop (110), wherein,
the cloud desktop (110) is configured to: receive (S301) an access notification of a disk, drive letter information and login user information sent by the cloud terminal;
create (S302) a disk device and a file system device according to the access notification, wherein the file system device is configured to store a file;
acquire (S303) a session according to the login user information; and creating, in the session, a drive letter according to the drive letter information; and
receive an operation request for the file in the drive letter, and generate a corresponding operation instruction and operation content according to the operation request, and send the operation instruction and operation content to the cloud terminal (120);
the cloud terminal (120) is configured to execute the operation instruction and the operation content on a file in the disk corresponding to the operation request; and
the cloud desktop (110) is further configured to receive a file operation result after execution and respond to the file operation result, to realize a synchronous operation between the file in the drive letter and the file in the corresponding disk; wherein,
a preset operation channel is preset for a preset operation request between the cloud terminal and the cloud desktop.

9. A device (200) for disk redirection, comprising:
a disk information reception module (301), configured to receive an access notification of a disk, drive letter information and corresponding login user information sent by a cloud terminal;
a creation module (302), configured to create a corresponding disk device and a corresponding file system device according to the access notification, wherein the file system device is configured to store the file;
a drive letter creation module (303), configured to acquire a corresponding session according to the login user information; and create, in the session, the corresponding drive letter according to the drive letter information;
a first generation module (201) configured to receive an operation request for the file in the drive letter, and generate a corresponding operation instruction and operation content according to the operation request;
a first sending module (202) configured to send the operation instruction and operation content to a cloud terminal, to allow the operation instruction and operation content being executed on a file in a disk of the cloud terminal, wherein the disk corresponds to the operation request; and
a response module (203) configured to receive a file operation result after execution and respond to the file operation result, to realize a synchronous operation between the file in the drive letter and the file in the corresponding disk; wherein,
a preset operation channel is preset for a preset operation request between the cloud terminal and the device for disk redirection.

10. A device for disk redirection, comprising:
a disk information acquisition module (701), configured to acquire drive letter information of a disk and corresponding login user information when receiving an access notification of the disk;
a disk information sending module (702), configured to send the access notification, the drive letter information and the login user information to a cloud desktop, to allow the cloud desktop to create a disk device and a corresponding file system device according to the access notification, to acquire a corresponding session according to the login user information, and to create, in the session, the drive letter according to the drive letter information;
an instruction reception module (601) configured to receive an operation instruction and operation content sent by the cloud desktop, wherein the operation instruction and the operation content are generated according to an operation request for a file in the drive letter of the cloud desktop;
an execution module (602) configured to execute the operation instruction and the operation content on the file in the disk corresponding to the operation request; and
a sending module (603) configured to send a file operation result after execution to the cloud desktop, to realize a synchronous operation between the file in the drive letter and the file in the corresponding disk; wherein,
a preset operation channel is preset for a preset operation request between the device for disk redirection and the cloud desktop.

11. A computer-readable storage medium storing a computer program which, when executed by a processor, causes the processor to perform the method for disk redirection of any of claims 1 to 7.

## Patentansprüche

1. Verfahren für Festplattenumleitung, das von einem Cloud-Desktop (110) durchgeführt wird, das Verfahren umfassend die folgenden Schritte:
Empfangen einer Zugriffsbenachrichtigung einer Festplatte, Laufwerksbuchstabeninformationen und Login-Benutzerinformationen, die von einem Cloud-Endgerät gesendet werden (S301);
Erzeugen einer Festplattenvorrichtung und einer Dateisystemvorrichtung gemäß der Zugriffsbenachrichtigung, wobei die Dateisystemvorrichtung zum Speichern einer Datei konfiguriert ist (S302);
Erfassen einer Sitzung gemäß den Login-Benutzerinformationen; und Erstellen, in der Sitzung, des Laufwerksbuchstabens gemäß den Laufwerksbuchstabeninformationen (S303);
Empfangen einer Betriebsanforderung für die Datei in dem Laufwerksbuchstaben und Erzeugen einer entsprechenden Betriebsanweisung und eines Betriebsinhalts gemäß der Betriebsanforderung (S201);
Senden der Betriebsanweisung und des Betriebsinhalts an das Cloud-Endgerät, um zu ermöglichen, dass die Betriebsanweisung und der Betriebsinhalt an der Datei auf der Festplatte des Cloud-Endgeräts ausgeführt werden, wobei die Festplatte der Betriebsanforderung entspricht (S202); und
Empfangen eines Dateibetriebsresultats nach Ausführung und Reagieren auf das Dateibetriebsresultat, um einen synchronen Betrieb zwischen der Datei in dem Laufwerksbuchstaben und der Datei auf der entsprechenden Festplatte zu realisieren (S203), wobei
ein voreingestellter Betriebskanal für eine voreingestellte Betriebsanforderung zwischen dem Cloud-Endgerät und dem Cloud-Desktop (110) voreingestellt ist.

2. Verfahren nach Anspruch 1,
wobei das Verfahren ferner Folgendes umfasst:
Beurteilen, ob die Betriebsanforderung eine voreingestellte Betriebsanforderung ist, wobei die voreingestellte Betriebsanforderung eine Kopieren-und-Einfügen-Betriebsanforderung und eine Ausschneiden-und-Einfügen-Betriebsanforderung umfasst (S401);
wobei ein Erzeugen des Betriebsinhalts gemäß der Betriebsanforderung Folgendes umfasst:
Erzeugen einer lokalen Ausführungsanweisung gemäß der voreingestellten Betriebsanforderung als Reaktion darauf, dass die Betriebsanforderung die voreingestellte Betriebsanforderung ist; und Ausführen der lokalen Ausführungsanweisung, um den Betriebsinhalt zu erlangen (S402).

3. Verfahren nach Anspruch 1, wobei ein Senden der Betriebsanweisung und des Betriebsinhalts an das Cloud-Endgerät Folgendes umfasst:
Senden der Betriebsanweisung und des Betriebsinhalts über den voreingestellten Betriebskanal (S2031);
wobei ein Empfangen des Dateibetriebsresultats nach Ausführung Folgendes umfasst:
Empfang des Dateibetriebsresultats über den voreingestellten Betriebskanal (S2041).

4. Verfahren nach Anspruch 1, wobei die Betriebsanweisung eine Schreibanweisung umfasst, und das Verfahren vor Senden der Betriebsanweisung und des Betriebsinhalts an das Cloud-Endgerät ferner Folgendes umfasst:
Verschlüsseln des Dateiinhalts, der von der Schreibanweisung übermittelt wird, um einen verschlüsselten Betriebsinhalt zu erlangen, als Reaktion darauf, dass die Betriebsanforderung eine Schreibbetriebsanforderung für eine transparente Verschlüsselungs-/Entschlüsselungsdatei ist (S501); und
Entschlüsseln einer transparenten Verschlüsselungs-/Entschlüsselungsdatei, um eine entschlüsselte transparente Verschlüsselungs-/Entschlüsselungsdatei zu erlangen, nach Erlangen des Dateibetriebsresultats der transparenten Verschlüsselungs-/Entschlüsselungsdatei, als Reaktion darauf, dass die Betriebsanforderung eine Lesebetriebsanforderung für die transparente Verschlüsselungs-/Entschlüsselungsdatei ist (S502).

5. Verfahren für Festplattenumleitung, das von einem Cloud-Endgerät (120) durchgeführt wird, das Verfahren umfassend die folgenden Schritte:
Erfassen (S701) von Laufwerksbuchstabeninformationen einer Festplatte und von Login-Benutzerinformationen als Reaktion auf ein Empfangen einer Zugriffsbenachrichtigung der Festplatte;
Senden (S702) der Zugriffsbenachrichtigung, der Laufwerksbuchstabeninformationen und der Login-Benutzerinformationen an einen Cloud-Desktop, um dem Cloud-Desktop zu ermöglichen, eine Festplattenvorrichtung und eine entsprechende Dateisystemvorrichtung gemäß der Zugriffsbenachrichtigung zu erstellen, eine entsprechende Sitzung gemäß den Login-Benutzerinformationen zu erfassen und in der Sitzung den Laufwerksbuchstaben gemäß den Laufwerksbuchstabeninformationen zu erstellen;
Empfangen (S601) einer Betriebsanweisung und eines Betriebsinhalts, die von dem Cloud-Desktop gesendet werden, wobei die Betriebsanweisung und der Betriebsinhalt gemäß einer Betriebsanforderung für eine Datei in dem Laufwerksbuchstaben des Cloud-Desktops erzeugt werden;
Ausführen (S602) der Betriebsanweisung und des Betriebsinhalts an der Datei auf der Festplatte, die der Betriebsanforderung entspricht; und
Senden (S603) eines Dateibetriebsresultats nach Ausführung an den Cloud-Desktop, um einen synchronen Betrieb zwischen der Datei in dem Laufwerksbuchstaben und der Datei auf der entsprechenden Festplatte zu realisieren; wobei
ein voreingestellter Betriebskanal für eine voreingestellte Betriebsanforderung zwischen dem Cloud-Endgerät und dem Cloud-Desktop voreingestellt ist.

6. Verfahren nach Anspruch 5, wobei
ein Empfangen des Betriebsinhalts, der von dem Cloud-Desktop gesendet wird, Folgendes umfasst:
Empfangen (S801) des Betriebsinhalts und der Betriebsanweisung, die über den voreingestellten Kanal gesendet werden, und die nach Ausführung einer lokalen Betriebsanweisung durch den Cloud-Desktop erlangt werden, wobei die lokale Betriebsanweisung gemäß der voreingestellten Betriebsanforderung erzeugt wird, umfassend eine Kopieren-und-Einfügen-Betriebsanforderung und eine Ausschneiden-und-Einfügen-Betriebsanforderung; und
ein Senden des Dateibetriebsresultats nach Ausführung an den Cloud-Desktop Folgendes umfasst:
Senden des Dateibetriebsresultats nach Ausführung an den Cloud-Desktop über den voreingestellten Kanal (S802).

7. Verfahren nach Anspruch 5, ferner umfassend:
Einrichten eines Festplattensynchronisierungs-Threads zum Synchronisieren der Datei, an der die Betriebsanweisung ausgeführt wird, mit der Festplatte.

8. System zur Festplattenumleitung, umfassend ein Cloud-Endgerät (120) und einen Cloud-Desktop (110), wobei
der Cloud-Desktop (110) zu Folgendem konfiguriert ist: Empfangen (S301) einer Zugriffsbenachrichtigung einer Festplatte, Laufwerksbuchstabeninformationen und Login-Benutzerinformationen, die von dem Cloud-Endgerät gesendet werden;
Erstellen (S302) einer Festplattenvorrichtung und einer Dateisystemvorrichtung gemäß der Zugriffsbenachrichtigung, wobei die Dateisystemvorrichtung zum Speichern einer Datei konfiguriert ist;
Erfassen (S303) einer Sitzung gemäß den Login-Benutzerinformationen; und Erstellen, in der Sitzung, eines Laufwerksbuchstabens gemäß den Laufwerksbuchstabeninformationen; und
Empfangen einer Betriebsanforderung für die Datei in dem Laufwerksbuchstaben und Erzeugen einer entsprechenden Betriebsanweisung und eines Betriebsinhalts gemäß der Betriebsanforderung, und Senden der Betriebsanweisung und des Betriebsinhalts an das Cloud-Endgerät (120);
wobei das Cloud-Endgerät (120) konfiguriert ist, um die Betriebsanweisung und den Betriebsinhalt an einer Datei auf der Festplatte auszuführen, die der Betriebsanforderung entspricht; und
der Cloud-Desktop (110) ferner konfiguriert ist, um nach Ausführung ein Dateibetriebsresultat zu empfangen und auf das Dateibetriebsresultat zu reagieren, um einen synchronen Betrieb zwischen der Datei in dem Laufwerksbuchstaben und der Datei auf der entsprechenden Festplatte zu realisieren; wobei
ein voreingestellter Betriebskanal für eine voreingestellte Betriebsanforderung zwischen dem Cloud-Endgerät und dem Cloud-Desktop voreingestellt ist.

9. Vorrichtung (200) zur Festplattenumleitung, umfassend:
ein Festplatteninformation-Empfangsmodul (301), das konfiguriert ist, um eine Zugriffsbenachrichtigung einer Festplatte, Laufwerksbuchstabeninformationen und entsprechende Login-Benutzerinformationen zu empfangen, die von einem Cloud-Endgerät gesendet werden; ein Erstellungsmodul (302), das konfiguriert ist, um eine entsprechende Festplattenvorrichtung und eine entsprechende Dateisystemvorrichtung gemäß der Zugriffsbenachrichtigung zu erstellen, wobei die Dateisystemvorrichtung zum Speichern der Datei konfiguriert ist;
ein Laufwerksbuchstaben-Erstellungsmodul (303), das konfiguriert ist, um eine entsprechende Sitzung gemäß den Login-Benutzerinformationen zu erfassen; und in der Sitzung den entsprechenden Laufwerksbuchstaben gemäß den Laufwerksbuchstabeninformationen zu erstellen;
ein erstes Erzeugungsmodul (201), das konfiguriert ist, um eine Betriebsanforderung für die Datei in dem Laufwerksbuchstaben zu empfangen und eine entsprechende Betriebsanweisung und einen Betriebsinhalt gemäß der Betriebsanforderung zu erzeugen;
ein erstes Sendemodul (202), das konfiguriert ist, um die Betriebsanweisung und den Betriebsinhalt an ein Cloud-Endgerät zu senden, um zu ermöglichen, dass die Betriebsanweisung und der Betriebsinhalt an einer Datei auf einer Festplatte des Cloud-Endgeräts ausgeführt werden, wobei die Festplatte der Betriebsanforderung entspricht; und
ein Reaktionsmodul (203), das konfiguriert ist, um nach Ausführung ein Dateibetriebsresultat zu empfangen und auf das Dateibetriebsresultat zu reagieren, um einen synchronen Betrieb zwischen der Datei in dem Laufwerksbuchstaben und der Datei auf der entsprechenden Festplatte zu realisieren; wobei
ein voreingestellter Betriebskanal für eine voreingestellte Betriebsanforderung zwischen dem Cloud-Endgerät und der Vorrichtung zur Festplattenumleitung voreingestellt ist.

10. Vorrichtung zur Festplattenumleitung, umfassend:
ein Festplatteninformation-Erfassungsmodul (701), das konfiguriert ist, um Laufwerksbuchstabeninformationen einer Festplatte und entsprechende Login-Benutzerinformationen zu erfassen, wenn eine Zugriffsbenachrichtigung der Festplatte empfangen wird; ein Festplatteninformation-Sendemodul (702), das konfiguriert ist, um die Zugriffsbenachrichtigung, die Laufwerksbuchstabeninformationen und die Anmeldungsbenutzerinformationen an einen Cloud-Desktop zu senden, um dem Cloud-Desktop zu ermöglichen, eine Festplattenvorrichtung und eine entsprechende Dateisystemvorrichtung gemäß der Zugriffsbenachrichtigung zu erstellen, eine entsprechende Sitzung gemäß den Login-Benutzerinformationen zu erfassen und in der Sitzung den Laufwerksbuchstaben gemäß den Laufwerksbuchstabeninformationen zu erstellen;
ein Anweisungsempfangsmodul (601), das konfiguriert ist, um eine Betriebsanweisung und einen Betriebsinhalt zu empfangen, die von dem Cloud-Desktop gesendet werden, wobei die Betriebsanweisung und der Betriebsinhalt gemäß einer Betriebsanforderung für eine Datei in dem Laufwerksbuchstaben des Cloud-Desktops erzeugt werden;
ein Ausführungsmodul (602), das konfiguriert ist, um die Betriebsanweisung und den Betriebsinhalt an der Datei auf der Festplatte auszuführen, die der Betriebsanforderung entspricht; und
ein Sendemodul (603), das konfiguriert ist, um nach Ausführung ein Dateibetriebsresultat an den Cloud-Desktop zu senden, um einen synchronen Betrieb zwischen der Datei in dem Laufwerksbuchstaben und der Datei auf der entsprechenden Festplatte zu realisieren; wobei ein voreingestellter Betriebskanal für eine voreingestellte Betriebsanforderung zwischen der Vorrichtung zur Festplattenumleitung und dem und dem Cloud-Desktop voreingestellt ist.

11. Computerlesbares Speichermedium, das ein Computerprogramm speichert, das, wenn es von einem Prozessor ausgeführt wird, den Prozessor veranlasst, das Verfahren zur Festplattenumleitung nach einem der Ansprüche 1 bis 7 durchzuführen.

## Revendications

1. Procédé de redirection de disque, mis en œuvre par un bureau dans le nuage (110), ledit procédé comprenant les étapes suivantes :
la réception d'une notification d'accès à un disque, des informations relatives à la lettre de lecteur et des identifiants de connexion de l'utilisateur, envoyées par un client léger (S301) ;
la création d'un périphérique de disque et d'un périphérique de système de fichiers conforme à la notification d'accès, le périphérique de système de fichiers étant configuré pour stocker un fichier (S302) ;
l'acquisition d'une session en fonction des identifiants de connexion de l'utilisateur ; et la création, dans la session, de la lettre de lecteur en fonction des informations relatives à la lettre de lecteur (S303) ;
la réception d'une demande d'opération relative au fichier contenu dans la lettre de lecteur, et la génération d'une instruction d'opération correspondante ainsi que du contenu de l'opération en fonction de ladite demande d'opération (S201) ;
l'envoi de l'instruction d'opération et du contenu de l'opération au client léger, afin de permettre à l'instruction d'opération et au contenu de l'opération d'être exécutés sur le fichier contenu sur le disque du client léger, ce disque correspondant à la demande d'opération (S202) ; et
la réception d'un résultat d'opération sur fichier après son exécution et le traitement du résultat de l'opération sur fichier, afin de réaliser une opération synchrone entre le fichier associé à la lettre de lecteur et le fichier contenu sur le disque correspondant (S203), dans lequel,
un canal d'opération prédéfini est prédéfini pour une demande d'opération prédéfinie entre le client léger et le bureau dans le nuage (110).

2. Procédé selon la revendication 1,
dans lequel le procédé comprend en outre :
la détermination de la nature de la demande d'opération, s'il s'agit d'une demande d'opération prédéfinie, cette demande d'opération prédéfinie comprenant une demande d'opération copier-coller et une demande d'opération couper-coller (S401) ;
dans lequel la génération du contenu de l'opération en fonction de la demande d'opération comprend :
la génération d'une instruction d'exécution locale en fonction de la demande d'opération prédéfinie, en réponse à la demande d'opération correspondant à ladite demande d'opération prédéfinie ; et l'exécution de l'instruction d'exécution locale afin d'obtenir le contenu de l'opération (S402).

3. Procédé selon la revendication 1, dans lequel l'envoi de l'instruction d'opération et du contenu de l'opération au client léger comprend :
l'envoi des instructions et du contenu de l'opération au moyen du canal de communication prédéfini (S2031) ;
dans lequel la réception du résultat de l'opération sur fichier après son exécution comprend :
la réception du résultat de l'opération sur fichier au moyen du canal d'opération prédéfini (S2041).

4. Procédé selon la revendication 1, dans lequel l'instruction d'opération comprend une instruction d'écriture, et avant l'envoi de l'instruction d'opération et du contenu de l'opération au client léger, le procédé comprend en outre :
le cryptage du contenu du fichier transmis par l'instruction d'écriture afin d'obtenir un contenu d'opération crypté, en réponse au fait que la demande d'opération est une demande d'opération d'écriture portant sur un fichier à cryptage et décryptage transparents (S501) ; et
le décryptage d'un fichier de cryptage-décryptage transparent afin d'obtenir un fichier de cryptage-décryptage transparent décrypté, après obtention du résultat de l'opération sur le fichier de cryptage-décryptage transparent, en réponse à la demande d'opération qui est une demande d'opération de lecture sur le fichier de cryptage-décryptage transparent (S502).

5. Procédé de redirection de disque, mis en œuvre par un client léger (120), ledit procédé comprenant les étapes suivantes :
l'acquisition (S701) des informations relatives à la lettre de lecteur d'un disque et des identifiants de connexion de l'utilisateur suite à la réception d'une notification d'accès du disque ;
l'envoi (S702) de la notification d'accès, des informations relatives à la lettre de lecteur et des identifiants de connexion de l'utilisateur vers un bureau dans le nuage, afin de permettre à ce dernier de créer un périphérique de disque et un périphérique de système de fichiers correspondant en fonction de la notification d'accès, d'acquérir une session correspondante en fonction des identifiants de connexion de l'utilisateur, et de créer, pendant la session, la lettre de lecteur en fonction des informations relatives à la lettre de lecteur ;
la réception (S601) d'une instruction d'opération et d'un contenu de l'opération envoyés par le bureau dans le nuage, l'instruction d'opération et le contenu de l'opération étant générés en fonction d'une demande d'opération relative à un fichier contenu dans une lettre de lecteur du bureau dans le nuage ;
l'exécution (S602) de l'instruction d'opération et du contenu de l'opération sur le fichier contenu dans le disque correspondant à la demande d'opération ; et
l'envoi (S603) du résultat d'une opération sur fichier, après son exécution, vers le bureau dans le nuage, afin d'assurer une opération synchrone entre le fichier contenu dans la lettre de lecteur et le fichier contenu dans le disque correspondant ; dans lequel,
un canal d'opération prédéfini est prédéfini pour une demande d'opération prédéfinie entre le client léger et le bureau dans le nuage.

6. Procédé selon la revendication 5, dans lequel,
la réception du contenu de l'opération envoyé par le bureau dans le nuage comprend :
la réception (S801) du contenu de l'opération et de l'instruction d'opération qui sont envoyés au moyen du canal prédéfini et obtenus après que le bureau dans le nuage a exécuté une instruction d'opération locale, l'instruction d'opération locale étant générée en fonction de la demande d'opération prédéfinie comprenant une demande d'opération copier-coller et une demande d'opération couper-coller ; et
l'envoi du résultat de l'opération sur fichier après son exécution vers le bureau dans le nuage comprend :
l'envoi du résultat de l'opération sur fichier après son exécution vers le bureau dans le nuage au moyen du canal prédéfini (S802).

7. Procédé selon la revendication 5, comprenant en outre :
la création d'un fil de synchronisation de disque destiné à synchroniser le fichier, sur lequel l'instruction d'opération est exécutée, avec le disque.

8. Système de redirection de disque, comprenant un client léger (120) et un bureau dans le nuage (110), dans lequel,
le bureau dans le nuage (110) est configuré pour : recevoir (S301) une notification d'accès à un disque, des informations relatives à la lettre de lecteur et des identifiants de connexion de l'utilisateur, envoyées par un client léger ;
la création (S302) d'un périphérique de disque et d'un périphérique de système de fichiers conforme à la notification d'accès, le périphérique de système de fichiers étant configuré pour stocker un fichier ;
l'acquisition (S303) d'une session en fonction des identifiants de connexion de l'utilisateur ; et la création, dans la session, d'une lettre de lecteur en fonction des informations relatives à la lettre de lecteur ; et
la réception d'une demande d'opération relative au fichier contenu dans la lettre de lecteur, et la génération d'une instruction d'opération correspondante ainsi que du contenu de l'opération en fonction de ladite demande d'opération, et l'envoi de l'instruction d'opération ainsi que du contenu de l'opération au client léger (120) ;
le client léger (120) est configuré pour exécuter l'instruction d'opération et le contenu de l'opération sur le fichier contenu dans le disque correspondant à la demande d'opération ; et
le bureau dans le nuage (110) est en outre configuré pour recevoir un résultat d'opération sur fichier après son exécution et traiter le résultat de l'opération sur fichier, afin de réaliser une opération synchrone entre le fichier contenu dans la lettre de lecteur et le fichier contenu sur le disque correspondant, dans lequel,
un canal d'opération prédéfini est prédéfini pour une demande d'opération prédéfinie entre le client léger et le bureau dans le nuage.

9. Dispositif (200) de redirection de disque, comprenant :
un module de réception des informations sur le disque (301), configuré pour recevoir une notification d'accès à un disque, des informations relatives à la lettre de lecteur et des identifiants de connexion de l'utilisateur correspondantes envoyées par un client léger ;
un module de création (302), configuré pour créer un périphérique de disque correspondant et un périphérique de système de fichiers correspondant conforme à la notification d'accès, le périphérique de système de fichiers étant configuré pour stocker le fichier ;
un module de création d'une lettre de lecteur (303), configuré pour acquérir une session correspondante en fonction des identifiants de connexion de l'utilisateur ; et créer, dans la session, la lettre de lecteur correspondante en fonction des informations relatives à la lettre de lecteur ;
un premier module de génération (201) configuré pour recevoir une demande d'opération relative au fichier contenu dans la lettre de lecteur, et générer d'une instruction d'opération correspondante ainsi que du contenu de l'opération en fonction de la demande d'opération ;
un premier module d'envoi (202) configuré pour envoyer l'instruction d'opération et le contenu de l'opération au client léger, afin de permettre à l'instruction d'opération et au contenu de l'opération d'être exécutés sur le fichier contenu dans le disque du client léger, ce disque correspondant à la demande d'opération ; et
un module de réponse (203) configuré pour recevoir un résultat d'opération sur fichier après son exécution et traiter le résultat de l'opération sur le fichier, afin de réaliser une opération synchrone entre le fichier contenu dans la lettre de lecteur et le fichier contenu sur le disque correspondant, dans lequel,
un canal d'opération prédéfini est prédéfini pour une demande d'opération prédéfinie entre le client léger et le dispositif destiné à la redirection du disque.

10. Dispositif de redirection de disque, comprenant :
un module d'acquisition d'informations sur le disque (701), configuré pour acquérir les informations relatives à la lettre de lecteur d'un disque ainsi que les identifiants de connexion de l'utilisateur correspondants pendant la réception d'une notification d'accès du disque ;
un module d'envoi des informations du disque (702), configuré pour envoyer la notification d'accès, les informations relatives à la lettre de lecteur et les identifiants de connexion de l'utilisateur vers un bureau dans le nuage, afin de permettre à ce dernier de créer un périphérique de disque et un périphérique de système de fichiers correspondant en fonction de la notification d'accès, d'acquérir une session correspondante en fonction des informations d'identification de l'utilisateur, et de créer, pendant la session, la lettre de lecteur en fonction des informations relatives à la lettre de lecteur ;
un module de réception d'instruction (601) configuré pour recevoir une instruction d'opération et un contenu de l'opération envoyés par le bureau dans le nuage, l'instruction d'opération et le contenu de l'opération étant générés en fonction d'une demande d'opération relative à un fichier contenu dans une lettre de lecteur du bureau dans le nuage ;
un module d'exécution (602) configuré pour exécuter l'instruction d'opération et le contenu de l'opération sur le fichier contenu dans le disque correspondant à la demande d'opération ; et
un module d'envoi (603) configuré pour envoyer le résultat d'une opération sur fichier, après son exécution, vers le bureau dans le nuage, afin d'assurer une opération synchrone entre le fichier contenu dans la lettre de lecteur et le fichier contenu dans le disque correspondant ; dans lequel,
un canal d'opération prédéfini est prédéfini pour une demande d'opération prédéfinie entre le dispositif destiné à la redirection du disque et le bureau dans le nuage.

11. Support de stockage lisible par ordinateur stockant un programme informatique qui, lorsqu'il est exécuté par un processeur, amène le processeur à exécuter le procédé de redirection de disque selon l'une quelconque des revendications 1 à 7.
